# EUROPÄISCHE PATENTANMELDUNG

(11) **EP 1 195 538 A1**
(43) Veröffentlichungstag der Anmeldung: **10.04.2002**
(21) Anmeldenummer: 00121965.8
(22) Anmeldetag: 09.10.2000
(51) Int. Cl.: F16D 65/16, B60T 13/74, F16D 65/21

(54) **Elektrisch ansteuerbare Bremsbestätigungsvorrichtung**

(71) Anmelder: GUSTAV MAGENWIRTH GmbH & Co., D-72574 Bad Urach (DE)
(72) Erfinder: Hirth, Edmund, 71131 Unterjettingen (DE); Rottenkolber, Ludwig, 72574 Bad Urach (DE)
(74) Vertreter: Haug, Dietmar, Dipl.-Ing.

(57) **Zusammenfassung**

Die Erfindung betrifft eine elektrisch ansteuerbare Bremsbetätigungsvorrichtung mit einem Linearantrieb, der mindestens eine Magnetspule und einen beweglichen Anker enthält. Um einen einfachen Aufbau zu erreichen und Bremskraft in der erforderlichen Größe zu erzeugen, wird vorgeschlagen, daß der Anker (5) auf einen ersten Kolben (9) wirkt, der in einem ersten Zylinder (8) verschiebbar ist, daß ein zweiter, vorzugsweise größerer Kolben (20), der in einem zweiten Zylinder (19) verschiebbar ist, auf den Bremsbelag (21) wirkt, und daß der erste und der zweite Zylinder (8 und 19) miteinander verbunden und mit Flüssigkeit gefüllt sind. Eine bevorzugte Ausführungsform enthält eine Schnüffelbohrung (15), die den ersten Zylinder (8) im Ruhezustand mit einem Vorratsbehälter für die Flüssigkeit verbindet.

## Beschreibung

Die Erfindung betrifft eine elektrisch ansteuerbare Bremsbetätigungsvorrichtung mit einem Linearantrieb, der mindestens eine Magnetspule und einen beweglichen Anker enthält, sowie einen Bremssattel mit einer derartigen Betätigungsvorrichtung.

Die Vorrichtung ist Teil eines Bremssystems, das von Fachleuten üblicherweise "brake by wire" genannt wird. Eine solche Bremsbetätigungsvorrichtung ist aus der DE 44 18 397 C2 bekannt. Dort wird ein elektrischer Linearantrieb verwendet, der unmittelbar auf den Bremsbelag wirkt und dessen Schubstange aus magneto-striktivem Werkstoff besteht und im Stator durch einen Festsitz gehalten ist. Bei elektrischer Beaufschlagung verringert sich der Durchmesser des Kerns, so daß eine Verschiebung möglich ist. Die Lösung erfordert bei begrenzter Auswahl eine sorgfältige Herstellung des Werkstoffes des Kerns sowie wegen des Festsitzes des Kerns im Stator, der unter den widrigen Betriebsbedingungen, denen ein Bremssattel ausgesetzt ist, wie beispielsweise Hitze, Nässe, Salze, jahrelang gewährleistet sein muß, höchste Anforderungen an konstruktive Ausbildung und Fertigung. Beim Anlegen des Bremsbelages an der Scheibe muß, weil keinerlei Ubersetzung vorgesehen ist, die volle Kraft zur Verfügung stehen, was eine sehr hohe Stromaufnahme erfordert. Aus diesen Gründen ist die Lösung im rauhen Alltagsbetrieb mit Problemen behaftet.

Die DE 197 03 230 A1 zeigt ein Bremssystem, bei dem als elektrisch getriebener Betätiger ein magnetostriktives Element eingesetzt wird, das sich auf Grund von Magnetostriktion ausdehnt und kontrahiert. Zur Vergrößerung des Hubs wird eine hydraulische Untersetzung verwendet. Wie in Spalte 7, Zeile 25 bis 37 ausgeführt, kann der Hub der Bremsbeläge bei einer zehnfachen hydraulischen Untersetzung nur auf circa 1,0 mm gebracht werden. Dieser Hub ist in der Regel ausreichend, um das Lüftungsspiel der Bremse zum Bremsen zu überwinden. Jedoch ist es nicht möglich, bei so geringen Hüben ein einfaches System zum Ausgleich von Temperaturschwankungen der Bremsflüssigkeit oder der Abnutzung der Bremsbeläge vorzusehen, bei dem eine Dichtung des Geberkolbens zunächst eine Schnüffellochbohrung überfährt, die auf bekannte Weise mit einem Ausgleichbehälter verbunden ist. Daher hat dieses Bremssystem den Nachteil, daß komplizierte und aufwendige Ausgleichsanordnungen vorgesehen werden müssen.

Eine weitere Bremsbetätigungsvorrichtung ist aus der DE 195 19 308 C2 bekannt. Dort findet ein Elektromotor Verwendung, der über einen Spindeltrieb ein Hydraulikgetriebe antreibt. Das bedeutet, daß die Energie mit den damit verbundenen Verlusten zwei Mal umgewandelt wird und daß die Einheit sehr aufwendig ist.
Außerdem muss der Belagverschleiß durch Nachrücken des Primärkolbens des Hydraulikgetriebes ausgeglichen werden, was einen großen Weg und eine entsprechende Baulänge erforderlich macht.

Die DE 41 07 473 A1 zeigt eine elektrisch ansteuerbare Bremsbetätigungsvorrichtung gemäß dem Oberbegriff von Anspruch 1.

Die elektrische Ansteuerung der Bremsbetätigungsvorrichtung erfolgt bei der DE 41 07 473 A1 mit einem Linearantrieb, der eine Magnetspule und einen beweglichen Magnetanker enthält. Um die thermische Belastung des Magnetankers zu reduzieren, führt die DE 41 07 473 A1 aus, daß der Magnetanker nicht direkt mit der den Bremsbelag tragenden Betätigungsbacke einer Bremse verbunden werden sollte. Zur Übersetzung der von den elektrischen Betätigungsteilen aufgebrachten Kraft wird eine mechanische Übersetzung mit einer Tellerfeder offenbart. Diese Anordnung hat den Nachteil, daß bei der mechanischen Übersetzung insbesondere durch die Verformung der Tellerfeder Verluste auftreten.

Der Erfindung liegt daher die Aufgabe zugrunde, die elektrisch ansteuerbare Bremsbetätigungsvorrichtung gemäß dem Oberbegriff von Anspruch 1 derart weiterzubilden, daß bei einem einfachen Aufbau eine möglichst verlustarme Übersetzung der von dem Linearantrieb aufgebrachten Kraft realisierbar ist, ohne die elektrischen Betätigungselemente des Linearantriebs übermäßig thermisch zu belasten.

Die Aufgabe der Erfindung wird mit einer elektrisch ansteuerbaren Bremsbetätigungsvorrichtung gemäß den Merkmalen von Anspruch 1 gelöst. Vorteilhafte Ausgestaltungen der Erfindung sind in den abhängigen Ansprüchen angegeben.

Die erfindungsgemäße elektrisch ansteuerbare Bremsbetätigungsvorrichtung hat den Vorteil, daß durch das Vorsehen einer hydraulischen Übersetzung eine möglichst verlustfreie Verstärkung der von dem beweglichen Anker aufgebrachten Kraft erreicht werden kann. Da der bewegliche Anker nicht direkt auf die Hydraulikflüssigkeit sondern auf einen ersten Kolben wirkt, wird die beim Bremsen in der Hydraulikflüssigkeit entstehende Wärme nicht direkt auf den Anker übertragen, so daß eine übermäßige thermische Belastung des Ankers vermieden werden kann.

Gemäß einer bevorzugten Ausführung der Erfindung ist der Kolben gegenüber dem beweglichen Anker thermisch isoliert. Beispielsweise kann eine den Anker mit dem beweglichen Kolben verbindende Stange aus thermisch isolierenden Material ausgebildet sein. Ebenfalls ist es möglich, daß der erste Kolben aus einem thermisch isolierenden Material ausgebildet ist. Alternativ kann auch die Verbindung zwischen dem Anker und dem ersten Kolben durch ein Bauteil mit verhältnismäßig kleinem Querschnitt ausgebildet werden, derart, daß die thermische Verbindung zwischen Kolben und Anker auf ein akzeptables Maß reduziert ist.

Es ist auch die Aufgabe der Erfindung, eine elektrisch ansteuerbare Bremsbetätigungsvorrichtung mit einem herkömmlichen Linearantrieb vorzuschlagen, die im Aufbau einfach ist und bei der die Bremskraft in jeder erforderlichen Größe zur Verfügung steht.

Auch diese Aufgabe wird durch die Merkmale des Anspruchs 1 gelöst.

Eine weitere Aufgabe der Erfindung ist es, den Hub des Ankers nur zum Anlegen der Bremsbeläge an die Bremsscheibe zu verwenden und die Abnutzung der Beläge durch andere Mittel zu kompensieren.

Diese weitere Aufgabe wird durch die Merkmale der Ansprüche 4 bzw. 5 gelöst.

Die erfindungsgemäße Bremsbetätigungsvorrichtung hat den weiteren Vorteil, durch die Verwendung eines Linearantriebs einfach im Aufbau und durch die hydraulische Kraftübersetzung innerhalb weiter Grenzen problemlos an die jeweiligen Betriebsbedingungen anpassbar zu sein. Der Antrieb kann im einfachsten Fall eine Magnetspule mit Anker sein. Die Erfindung schließt jedoch auch andere bekannte Linearantriebe ein, bei denen der Anker stets beweglich ist, z.B. Linearmotoren, die zusätzliche Permanentmagnete beinhalten, oder Proportionalmagnete. Ein wesentlicher Gedanke der Erfindung ist es, einen derartigen einfachen und platzsparenden Antrieb mit einem hydraulischen Kraftverstärker zu kombinieren, indem der Anker einen ersten Kolben, den Geberkolben, verschiebt, der Flüssigkeit verdrängt, wodurch der zweite größere Kolben, der Nehmerkolben, den Bremsbelag gegen die Scheibe drückt. Die hydraulische Kraftverstärkung besteht aus lauter bewährten Elementen und die gesamte Vorrichtung macht komplizierte und teure Übersetzungsgetriebe und mechanische Bauteile zur Kraftverstärkung überflüssig. Denkbar ist sowohl eine Anordnung, bei der die Bremsung durch die elektromagnetische Kraft und der Rückzug durch eine Feder bewirkt wird, als auch eine Anordnung, bei der die Verschiebung des Ankers in beiden Richtungen durch je eine Magnetspule erfolgt. Die Letztgenannte hat den Vorteil, daß durch die gleichzeitige Erregung beider Spulen in unterschiedlicher Stärke die auf den ersten Kolben wirkende Kraft sehr fein dosierbar ist.

Die Erregung der Magnetspulen erfolgt vorzugsweise durch ein Steuergerät, das die Größe der Kraft durch die Größe der Spannung oder des Stromes oder durch die intermittierende zeitliche Abfolge dieser Größen oder durch jede andere mögliche bekannte Art und Weise bestimmt. Das Steuergerät berücksichtigt dabei sowohl den Wunsch des Fahrers, verhindert aber auch das Blockieren oder das Durchdrehen eines Rades und/oder verarbeitet weitere Signale von Sensoren.

Eine besonders vorteilhafte Ausführung enthält eine Schnüffelbohrung, die den ersten Zylinder mit einem Vorratsbehälter verbindet und die unmittelbar vor der Primärdichtung des Geberkolbens in den Druckraum mündet. Auf diese Weise ist in unbetätigtem Zustand der Bremse der Druckraum stets mit dem Vorratsbehälter verbunden und Volumenschwankungen der Flüssigkeit durch Temperaturunterschiede können sich ausgleichen. Besonders vorteilhaft ist es, den Druckraum gegen den zweiten Kolben, den Nehmerkolben, auf die bei hydraulischen Scheibenbremsen übliche Art und Weise mit einem Dichtring von rechteckigem Querschnitt abzudichten, wobei der besagte Kolben im unbetätigten Zustand in seiner axialen Lage gehalten wird.

Der Dichtring sorgt in bekannter Weise durch seine definierte, axiale elastische Verformbarkeit dafür, daß der Kolben den Bremsbelag von der Scheibe zurückzieht und dessen Abnützung ausgleicht, wobei Flüssigkeit vom Behälter über das Schnüffelloch nachströmt. Der Geberkolben kann somit immer in die Ausgangsstellung zurückfahren und es braucht nur der zum Anlegen der Bremsbeläge notwendige Hub vorgesehen werden, was eine kurze Baulänge ermöglicht.

Der Vorratsbehälter selbst kann an der Vorrichtung direkt angebracht sein. In vielen Fällen ist es jedoch zweckmäßiger, ihn als getrennte Einheit an entfernter geeigneter Stelle anzubauen und durch eine Schlauchleitung mit der Schnüffelbohrung der Vorrichtung zu verbinden.

Die Bremsbetätigungsvorrichtung kann erfindungsgemäß Teil eines Bremssattels für eine Scheibenbremse sein, und ist vorzugsweise Teil eines Schwimmsattels für eine Scheibenbremse.

Im folgenden werden bevorzugte Ausführungsformen der Erfindung anhand der Zeichnungen näher erläutert.
- Figur 1: zeigt einen Schnitt durch eine erfindungsgemäße Bremsbetätigungsvorrichtung.
- Figur 2: zeigt einen Schnitt durch eine andere erfindungsgemäße Betätigungsvorrichtung.
- Figur 3: zeigt einen Schnitt durch einen Bremssattel mit der Bremsbetätigungsvorrichtung entsprechend Figur 2.

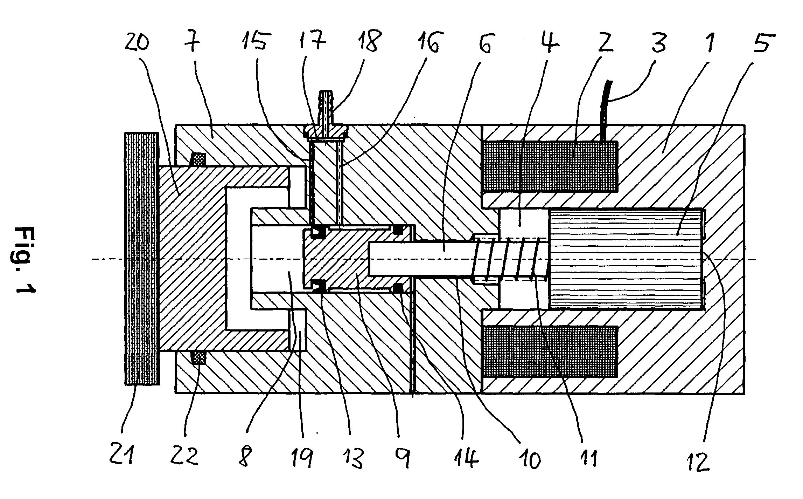

Die Bremsbetätigungsvorrichtung in Figur 1 hat ein Gehäuse 1 und eine in ihm gehaltene ringförmige Magnetspule 2 mit einer elektrischen Zuleitung 3. In der einseitig geschlossenen Bohrung 4 des Gehäuses 1 ist ein Anker 5 gelagert, dessen Außendurchmesser kleiner als der Bohrungsdurchmesser ist. Der Anker 5 ist somit in Längsrichtung der Bohrung 4 beweglich. Die Stange 6 ist auf ihrer einen Seite fest mit dem Anker verbunden.

In einem Zylindergehäuse 7, das mit dem Gehäuse 1 zusammengebaut ist, befindet sich ein erster Zylinder 8, in dem ein erster Kolben 9 verschieblich gelagert ist. Der Zylinder 8 ist durch eine Bohrung 10 mit der Bohrung 4 des Gehäuses 1 verbunden. Durch diese Bohrung 10 hindurch erstreckt sich die Stange 6, die an ihrem anderen Ende fest mit dem ersten Kolben 9 verbunden ist. Anker 5, Kolben 9 und Stange 6 bilden somit eine Einheit; alle Teile bewegen sich gemeinsam. Gegen den Anker 5 drückt außerdem eine Feder 11, die sich am Zylindergehäuse 7 abstützt, so daß dieser stets am Boden 12 der Bohrung 4 des Gehäuses 1 anliegt, sofern keine elektromagnetische Kraft auf ihn einwirkt. Damit nimmt auch der über die Stange 6 mit dem Anker 5 verbundene Kolben 9 in unbetätigtem Zustand eine genau definierte, immer gleiche Lage ein.

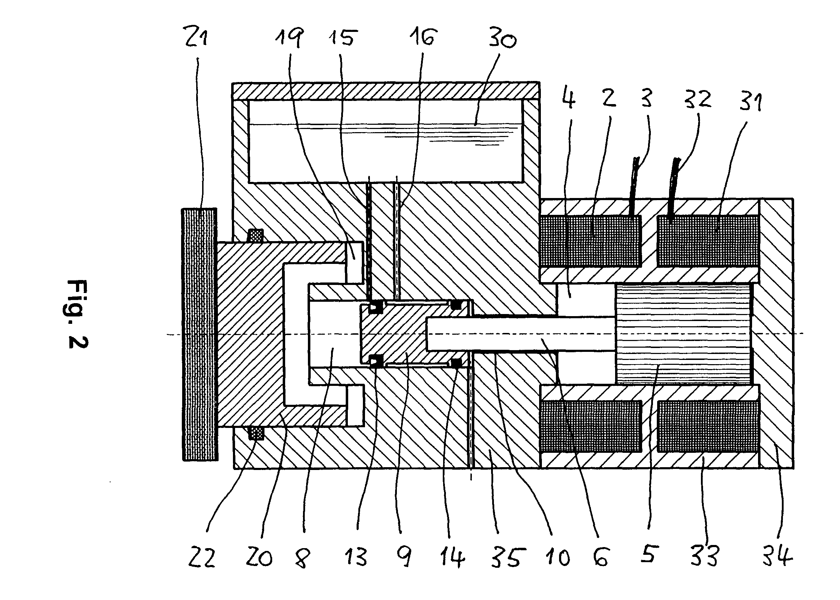

Der erste Kolben 9 ist in bekannter Weise mit einer Primärdichtung 13 und einer Sekundärdichtung 14 versehen. Unmittelbar vor der Primärdichtung mündet die Schnüffelbohrung 15 in den ersten Zylinder 8, zwischen den beiden Dichtungen die Nachlaufbohrung 16. Beide Bohrungen durchdringen die Wand des Gehäuses 9 und enden entweder in einem Raum 17, der mit einem Anschlußstutzen 18 verbunden ist, von dem aus ein nicht dargestellter Schlauch zu einem separaten Vorratsbehälter für Flüssigkeit führt, oder sie enden direkt in dem unmittelbar an der Bremsbetätigungsvorrichtung angebauten Vorratsbehälter 30 für die Flüssigkeit, wie in Figur 2 dargestellt.

Das Zylindergehäuse 7 enthält weiterhin den zweiten Zylinder 19, der im Durchmesser in der Regel größer ist als der erste Zylinder 8 und vorzugsweise konzentrisch angeordnet ist. In dem zweiten Zylinder ist ein zweiter Kolben 20 verschieblich gelagert, der auf den Bremsbelag 21 wirkt.

Die beiden Zylinder 8 und 19 bilden einen gemeinsamen Druckraum, der mit Flüssigkeit gefüllt ist. Der Druckraum wird durch die Dichtung 22 nach außen abgedichtet. Sie ist in bekannter Weise als Vierkantring gestaltet und hat durch ihre Elastizität in Zusammenhang mit der Form der sie aufnehmenden Nut die Fähigkeit, den Kolben 20 nach erfolgter Bremsung um ein bestimmtes Maß zurückzuziehen und gleichzeitig für seine Nachstellung zu sorgen, falls der Belag 21 abgenützt wird. In diesem Fall vergrößert sich der Druckraum und die zusätzlich benötigte Flüssigkeit wird über die Schnüffelbohrung 15 aus dem Vorratsbehälter nachgesaugt.

### Die Wirkungsweise ist folgende:

Wird die Magnetspule 2 unter Spannung gesetzt und vom Strom durchflossen, wird der Anker 5 angezogen. Der erste Kolben 9 wird somit nach links (in Figur 1) bewegt, wobei die Primärdichtung 13 die Schnüffelbohrung 15 überfahrt, so daß der Druckraum abgeschlossen ist. Der zweite Kolben 20 bewegt sich mit dem Bremsbelag 21 ebenfalls nach links, wobei sein Weg entsprechend dem Verhältnis der Flächen der beiden Zylinder 8 und 19 kleiner und die erzeugte Kraft größer wird. Wird die Erregung der Magnetspule 2 aufgehoben, so schiebt die Feder 11 den Anker zurück und drückt ihn gegen den Boden 12; der Kolben 9 nimmt seine ursprüngliche Lage ein. Unabhängig davon wird der Kolben 20 von der Dichtung 22 um den vorgegebenen Betrag, das Lüftspiel zurückgezogen.

In Figur 2 ist eine Anordnung dargestellt, bei der die Rückführung des Systems Anker 5, Kolben 9 und Stange 6 nicht durch die Feder 11, sondern durch eine zweite Magnetspule 31 mit einer Zuleitung 32 erfolgt. Beide Magnetspulen 2 und 31 sind im beidseitig offenen Gehäuse 33 eingebaut. Das Gehäuse ist an seinem freien Ende durch einen Deckel 34 verschlosssen, der den Anschlag für den Anker 5 bildet. Das Zylindergehäuse 35 enthält den Vorratsbehälter 30, kann jedoch stattdessen genauso wie die Ausführung in Figur 1 mit einem Anschlußstutzen 18 und einem entfernt angebauten Behälter versehen sein.

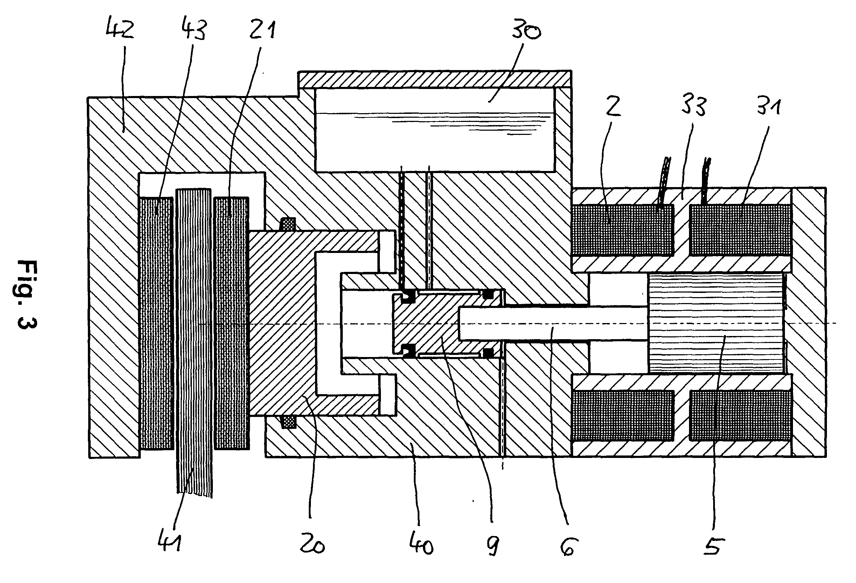

Figur 3 zeigt einen Bremssattel für eine Scheibenbremse mit einer erfindungsgemäßen Bremsbetätigungsvorrichtung, wie sie in Figur 2 dargestellt ist. Das Zylindergehäuse 40, an das das Gehäuse 33 angebaut ist, enthält einen die Bremsscheibe 41 umgreifenden Arm 42, an dem ein zweiter Bremsbelag 43 befestigt ist. Der Bremssattel ist in bekannter Weise als Schwimmsattel ausgebildet. Wenn bei Betätigung der Bremse der Kolben 20 den Belag 21 gegen die Bremsscheibe 41 drückt, verschiebt sich der in nicht dargestellten, sich senkrecht zur Bremsscheibe erstreckenden Führungen gehaltene Schwimmsattel in Folge der Reaktionskraft nach rechts (in Figur 3), bis der Bremsbelag 43 ebenfalls an der Bremsscheibe 41 anliegt und diese somit zwischen den beiden Bremsbelägen 21 und 43 eingespannt und durch die Reibung abgebremst wird.

Genauso ist es möglich, eine Scheibenbremse mit der Bremsbetätigungsvorrichtung entsprechend Figur 1 auszurüsten. Auch ein Festsattel mit zwei derartigen Bremsbetätigungsvorrichtungen ist denkbar.

## Patentansprüche

1. Elektrisch ansteuerbare Bremsbetätigungsvorrichtung mit einem Linearantrieb, der mindestens eine Magnetspule und einen beweglichen Anker enthält
**dadurch gekennzeichnet, daß** der Anker (5) auf einen ersten Kolben (9) wirkt, der in einem ersten Zylinder (8) verschiebbar ist, daß ein zweiter, vorzugsweise größerer Kolben (20), der in einem zweiten Zylinder (19) verschiebbar ist, auf den Bremsbelag (21) wirkt, und daß der erste und der zweite Zylinder (8 und 19) miteinander verbunden und mit Flüssigkeit gefüllt sind.

2. Bremsbetätigungsvorrichtung nach Anspruch 1,
**dadurch gekennzeichnet, daß** der Anker (5) in Richtung zum ersten Kolben (9) durch die Kraftwirkung der Magnetspule (2) und in der Gegenrichtung durch die Kraft einer Feder (11) bewegt wird.

3. Bremsbetätigungsvorrichtung nach Anspruch 1,
**dadurch gekennzeichnet, daß** der Anker (5) in der einen Richtung durch die Kraftwirkung einer ersten Magnetspule (2) und in der Gegenrichtung durch die Kraftwirkung einer zweiten Magnetspule (31) bewegt wird.

4. Bremsbetätigungsvorrichtung nach einem der Ansprüche 1 bis 3,
**dadurch gekennzeichnet, daß** der erste Zylinder (8) durch eine Schnüffelbohrung (15) mit einem Vorratsbehälter für die Flüssigkeit verbunden ist und daß die Primärdichtung (13) des ersten Kolbens (9) bei dessen Betätigung die Mündung der Schnüffelbohrung (15) in den Zylinder (8) überfährt.

5. Betätigungsvorrichtung nach Anspruch 4,
**dadurch gekennzeichnet, daß** der zweite Kolben (20) im zweiten Zylinder (19) durch eine Dichtung (22) mit vorzugsweise rechteckigem Querschnitt in seiner axialen Lage gehalten ist.

6. Bremsbetätigungsvorrichtung nach Anspruch 4 oder 5,
**dadurch gekennzeichnet, daß** der Vorratsbehälter (30) für die Flüssigkeit unmittelbar an der Bremsbetätigungsvorrichtung angebaut ist.

7. Bremsbetätigungsvorrichtung nach Anspruch 4 oder 5,
**dadurch gekennzeichnet, daß** der Vorratsbehälter für die Flüssigkeit eine getrennte Einheit bildet und mit der Bremsbetätigungsvorrichtung durch eine Schlauchleitung verbunden ist.

8. Bremsbetätigungsvorrichtung nach einem der vorhergehenden Ansprüche,
**dadurch gekennzeichnet, daß** der Anker (5) gegenüber der Flüssigkeit thermisch isoliert ist oder die thermische Verbindung zwischen dem Anker (5) und der Flüssigkeit auf ein zulässiges Maß reduziert ist.

9. Bremsbetätigungsvorrichtung nach einem der vorhergehenden Ansprüche,
**dadurch gekennzeichnet, daß** der erste Kolben eine thermisch isolierende oder thermisch schlecht leitende Beschichtung aufweist, daß der erste Kolben aus einen thermisch isolierenden oder thermisch schlecht leitendem Material ausgebildet ist, daß ein Verbindungselement, das zwischen dem ersten Kolben und dem Anker vorgesehen ist, eine thermische isolierende oder thermisch schlecht leitende Beschichtung aufweist, und/oder daß ein Verbindungselement zwischen dem Anker (5) und dem ersten Kolben (9) aus einem thermisch isolierenden oder thermisch schlecht leitendem Material ausgebildet ist.

10. Bremssattel für eine Scheibenbremse mit mindestens einer Bremsbetätigungsvorrichtung nach einem oder mehreren der vorstehenden Ansprüche.
